**Europäisches Patentamt**

**European Patent Office**

**Office européen des brevets**

(11) Veröffentlichungsnummer: **0 076 511**

**B1**

(12) # EUROPÄISCHE PATENTSCHRIFT

(45) Veröffentlichungstag der Patentschrift:
**15.01.86**

(21) Anmeldenummer: **82109174.1**

(22) Anmeldetag: **05.10.82**

(51) Int. Cl.⁴: **C 08 F 14/06,** C 09 J 3/14, C 08 F 2/24

(54) **Verfahren zur Herstellung von wässrigen Copolymerdispersionen und deren Verwendung.**

(30) Priorität: **06.10.81 DE 3139721**

(43) Veröffentlichungstag der Anmeldung:
**13.04.83 Patentblatt 83/15**

(45) Bekanntmachung des Hinweises auf die Patenterteilung:
**15.01.86 Patentblatt 86/3**

(84) Benannte Vertragsstaaten:
**AT BE CH DE FR GB IT LI NL SE**

(56) Entgegenhaltungen:
**EP-A-0 026 490**
**FR-A-2 154 839**
**GB-A-1 339 182**

**Die Akte enthält technische Angaben, die nach dem Eingang der Anmeldung eingereicht wurden und die nicht in dieser Patentschrift enthalten sind.**

(73) Patentinhaber: **WACKER- CHEMIE GMBH, Prinzregentenstrasse 22, D-8000 München 22 (DE)**

(72) Erfinder: **Ball, Peter, Dr. Dipl.- Chem., Kettelerstrasse 11, D-8261 Emmerting (DE)**
Erfinder: **Marquardt, Klaus, Dr. Dipl.- Chem., Lindacher Strasse 77, D-8263 Burghausen (DE)**
Erfinder: **Selig, Manfred, Dr. Dipl.- Chem., Regerstrasse 45, D-8263 Burhausen (DE)**
Erfinder: **Häfener, Klaus, Marienberger Strasse 25, D-8263 Burghausen (DE)**

EP 0 076 511 B1

LIBER, STOCKHOLM 1986

## Beschreibung

Wäßrige Copolymerdispersionen, insbesondere solche von Copolymeren mit einem überwiegenden Gehalt an Vinylchlorid (VC) und Ethylen (E) sind als Bindemittel für Anstrichfarben, Papierbeschichtungen oder Textilbeschichtungen sowie als Schmelzklebstoffe sehr gut geeignet. Die darin enthaltenen Copolymeren lassen sich aber auch nach Abtrennung des Wassers zu Formteilen, wie Rohrleitungen oder Isolierungen elektrischer Leiter verarbeiten.

Da VC und E als Rohstoffe aufgrund ihrer einfachen großtechnischen Herstellung bzw. Gewinnung preisgünstiger sind als andere ethylenisch ungesättigte Monomere, haben die hauptsächlich aus ihnen bestehenden Polymerisate im Zeitalter steigender Rohstoffpreise eine besondere Bedeutung.

Die Herstellung von Emulsionspolymerisaten, die zum überwiegenden Teil aus VC und E bestehen, ist jedoch sehr schwierig, da zum Einbau nennenswerter Mengen E in das Polymerisat hohe Drucke und damit sehr aufwendige Autoklavenanlagen notwendig sind.

So beschreibt beispielsweise die DE-OS 15 70 921 (& US 34 03 137) ein Verfahren zur Herstellung von Copolymeren des Ethylens und Vinylchlorids, bei dem zur Erreichung des Gehaltes von etwa 10 Gew.% Ethyleneinheiten im Copolymerisat bereits Drucke von über 1000 psi (= über 69 bar) notwendig sind. Um beispielsweise 24 Gew.% Ethylen ins Polymere einzupolymerisieren, sind dort bereits über 1000 bar notwendig (vgl. Beispiel 4). Selbst Drucke von über 3447 bar werden in dieser Anmeldung nicht ausgeschlossen. Die Möglichkeit zur Mitverwendung von Lösungsmitteln, wie Benzol, Chlorbenzol oder tert. Butylmethylether wird zwar erwähnt, ein Einfluß auf den Ethyleneinbau wird jedoch nicht beschrieben.

Ein demgegenüber verbessertes Verfahren beschreibt die DE-OS 21 39 041 (& GB 13 39 182). Dort wird bei Drucken von 34 bis 207 bar gearbeitet, um Copolymere mit 6 bis 30 % Ethyleneinheiten zu erhalten. So wird im Beispiel 7 dieser Anmeldung ein Copolymer aus 25,7 % E- und 74,3 % VC-Einheiten bei 138,3 bar Druck erzeugt. Dazu sind jedoch durchweg sehr lange Reaktionszeiten (ca. 12 bis 16 Stunden) notwendig, so daß nur eine für Polymerisationsverfahren sehr bescheidene Raum-Zeit-Leistung zu erreichen ist. Überdies ist es gemäß dieser Anmeldung wesentlich, die Copolymerisation unter absoluter Abwesenheit von Reduktionsmitteln durchzuführen, also auf Redox-Katalysator-Systeme zu verzichten. Diese sind jedoch vielfach wegen der dadurch niedrigeren Reaktionstemperatur und der damit vielfach erzielbaren höheren Molekulargewichte bevorzugt.

Eine extreme Variante des in DE-OS 21 39 041 beschriebenen Verfahrens wird in der EP-A- 26 490 vorgeschlagen, die eine Polymerisation unterhalb des Sättigungsdruckes der Monomeren beschreibt. Da unter diesen "monomer-verkhungerten (monomer starved)" Bedingungen sehr langsame Polymerisationsgeschwindigkeiten resultieren, müssen bei diesem Verfahren ungewöhnlich hohe Initiatormengen eingesetzt werden, um wirtschaftlich vertretbare Polymerisationszeiten zu ermöglichen. Hohe Initiatorkonzentrationen führen jedoch zwangsläufig zu niederigen Molekulargewichten, die bekanntermaßen viele anwendungstechnische Eigenschaften der Polymeren deutlich verschlechtern. Beispiel 4 dieser Anmeldung verdeutlicht den Initiatoreinfluß auf das Molekulargewicht besonders gut.

Aufgabe der Erfindung war es, ein weniger aufwendiges, schnelleres und daher wirtschaftlicheres Verfahren zur Herstellung von überwiegend VC und E enthaltenden Copolymeren in wäßriger Dispersion zu finden, das die vorstehend genannten Nachteile nicht besitzt.

Diese Aufgabe konnte überraschend gut durch das durch die Ansprüche gekennzeichnete Verfahren gelöst werden. Die in den so hergestellten Dispersionen enthaltenen Copolymeren enthalten überraschenderweise größere Gehalte an einpolymerisierten E-Einheiten als die bisher bei gleichem Druck hergestellten Copolymeren, wobei gleichzeitig kürzere Polymerisationszeiten erzielt werden.

Gegenstand der Erfindung ist ein Verfahren zur Herstellung feinteiliger wäßriger Copolymerdispersionen mit Festgehalten von 10 bis 75 Gew.%, bezogen auf Dispersion, durch Emulsionspolymerisation von
a)     1 bis 50 Gew.% Ethylen und
b)     99 bis 50 Gew.% mindestens eines Vinylmonomeren
mittels Radikalinitiator in Gegenwart von Emulgator und/oder Schutzkolloid, wobei sich die Vinylmonomerenphase zusammensetzt aus
b1)   60 bis 100 Gew.% Vinylchlorid,
b2)   0 bis 40 Gew.% ethylenisch ungesättigter, öllöslicher und mit a) und b1) Copolymerisierbarer Monomeren und
b3)   0 bis 10 Gew.% ethylenisch ungesättigter funktioneller und/oder mehrfach ungesättigter Monomeren,
dadurch gekennzeichnet, daß man
   I die Vinylmonomerenphase in einer Menge von etwa 1 bis 40 Gew.% vorlegt und
   II mindestens eine inerte organische Substanz mit einer Wasserlöslichkeit von $10^{-3}$ bis 200 g/l und einem Molekulargewicht von höchstens 1000 in einer Menge von 0,1 bis 15 Gew.%, jeweils bezogen auf das Gesamtgewicht der Komponente b), zumindest teilweise vorlegt,
   III den Rest der Komponente b) und ggf. der inerten organischen Substanz während der Polymerisation dosiert und
   IV bei einem Ethylendruck von 10 bis 150 bar, der spätestens zum Zeitpunkt der Auspolymerisation der Vorlage aufgebaut wird, bei Temperaturen von 0 bis 120°C polymerisiert.

Bei dem erfindungsgemäßen Verfahren werden die Vinylmonomeren der Komponente b) praktisch vollständig in das Polymere eingebaut, auch der Ethylengehalt des Polymerisates ist gegenüber herkömmlichen, bei gleichem Druck hergestellten Polymeren deutlich erhöht. Analog kann bei der erfindungsgemäßen Herstellung von väßrigen Dispersionen, die Copolymerisate aus Ethylen und Vinylmonomeren, insbesondere überwiegend VC, mit Ethylengehalten von vorzugsweise mindestens 3 Gew.%, bezogen auf das Polymere, enthalten, der Ethylendruck gegenüber den vorbekannten Verfahren gesenkt werden. Noch deutlicher wird dies bei der herstellung von Dispersionen solcher ethylenreicherer Copolymeren, z.B. mit mindestens 20, insbesondere mindestens 27 Gew.%, Ethyleneinheiten. Es können so erfindungsgemäß bei Drucken von bis zu 150 bar, vorzugsweise 10 bis 90, besonders vorzugsweise 30 bis 80, insbesondere bis höchstens 70 bar (aber jeweils über dem Sättigungsdruck der Vinylmonomeren) bei Polymerisationstemperaturen von 0 bis 120°C, vorzugsweise 10 bis 100°C, insbesondere 40 bis 80°C sogar bis zu 50 Ges.%, vorzugsweise bis zu 40, insbesondere bis 35 Gew.% Ethylen in das in der Dispersion entstehende Copolymerisat eingebaut werden. Dabei ist die Polymerisation im allgemeinen nach etwa 10 Stunden abgeschlossen. Genauer kann das Ende der Polymerisation durch die deutliche Abnahme der Wärmeentwicklung und des Druckes festgestellt werden. Dies ist vorzugsweise etwa 2 bis 3, insbesondere nach 1 bis 2 Stunden nach Ende der Dosierung der Vinylmonomeren der Fall. In bevorzugten Ausführungsformen ist die Polymerisationsdauer sogar noch kürzer, d.h. vielfach ist die Polymerisation bereits bei 7—8 Stunden beendet.

Die Zugabe der Vinylmonomeren b) erfolgt so, daß etwa 1 bis 40 Gew.%, vorzugsweise 1 bis 30 Gew.%, insbesondere bei VC-E-Copolymerisation ohne eine Komponente b2) vorzugsweise 3 bis 10 Gew.% vorgelegt werden und der Rest während der Polymerisation vorzugsweise im Maße des Verbrauchs dosiert werden. Besonders bevorzugt ist, die Dosierung erst dann zu beginnen, wenn die Konzentration der Vinylmonomeren, bezogen auf Gesamtdispersion, nur mehr 25 Gew.%, mehr bevorzugt nur mehr 20, insbesondere nur mehr 10 und am meisten bevorzugt nur mehr 5 Gew.% beträgt, und sie so durchzuführen, daß diese Grenze nicht mehr überschritten wird. Bevorzugt ist außerdem, daß dabei 1 Gew.% als Untergrenze der Vinylmonomerkonzentration nicht unterschritten wird.

Es ist aber auch möglich, einen ggf. in einem vorgeschalteten Polymerisationsschritt hergestellten Samenlatex, der im Rahmen der genannten Monomeren auch eine andere Zusammensetzung als die Vinylmonomerdosierung besitzen kann, vorzulegen. Beispielsweise kann so ein Samenlatex bis zu 50 Gew.% Ethyleneinheiten enthalten. Die Menge seines Polymeren wird vorzugsweise auf die Gesamtmenge der Monomeren, insbesondere der Komponente b) angerechnet. Die Vinylmonomeren können einzeln oder als Gemisch ggf. als wäßrige Voremulsion(en) zugeführt werden. Grundsätzlich kann sich die Zusammensetzung der Vinylmonomeren in der Vorlage von der der Dosierung utnterscheiden. Es ist auch möglich, ein Vinylmonomeres insgesamt vorzulegen und andere Vinylmonomere ganz oder teilweise zu dosieren.

Beim erfindungsgemäßen Verfahren kann das Ethylen bereits teilweise oder ganz mit vorgelegt werden, d.h. der beabsichtigte E-Druck kann bereits vor Beginn der Polymerisation aufgebaut werden. Er kann aber auch erst im Laufe der Polymerisation aufgebaut werden, jedoch spätestens dann, wenn die Vorlage auspolymerisiert oder ein der Vorlage entsprechender Umsatz erreicht ist, vorzugsweise spätestens dann, wenn mit der Dosierung der Vinylmonomeren begonnen wird. Der E-Druck kann innerhalb der genannten Grenzen während der Polymerisation beliebig ggf. auch mehrfach variiert werden, d.h., erhöht und/oder erniedrigt werden. Vorzugsweise wird er aber während der überwiegenden Zeit der Vinylmonomerdosierung konstant gehalten. Danach wird dann vorzugsweise kein Ethylen mehr zugeführt.

Als Vinylmonomeres (ggf. auch des Samenlatex) ist insbesondere das VC zu nennen, das mindestens 60 Gew.%, vorzugsweise mindestens 65, insbesondere mindestens 75 Gew.% der Komponente b) ausmacht. Als weitere Vinylmonomeren (ggf. auch des Samenlatex), die mit E und VC copolymerisierbar und öllöslich sind, sind zu nennen: ethylenisch ungesättigte Ester, wie Allyl- und vorzugsweise Vinylester von nicht ethylenisch ungesättigten, vorzugsweise gesättigten geradkettigen, verzweigten oder cyclischen Carbonsäuren, insbesondere von $C_1$ bis $C_{20}$-Alkylcarbonsäuren, z.B. Vinylacetat, Vinylpropionat, Vinylbutyrat, Vinyl-2-ethylhexanoat, Vinyllaurat, Vinylstearat, Vinylester von stark verzweigten Carbonsäuren, die z.B. durch die sogenannte Kochsynthese aus Olefinen und Kohlenoxid hergestellt werden können (sogenannte Versatic [(R)]-Säurevinylester), wie Mono- und Dialkylester von ethylenisch ungesättigten Carbonsäuren, insbesondere solche fon Alkoholen mit 1 bis 18, vorzugsweise 1 bis 8 C-Atomen mit $\alpha$, ß-ungesättigten $C_3$- bis $c_8$-Monocarbonsäuren, z.B. Methylester der Acryl-, der Methacryl- under der Crotonsäure, die Ethyl-, Propyl-, Butyl-, 2-Ethylhexyl-, Lauryl- und Stearylester dieser Carbonsäuren, Dialkylester von ethylenisch ungesättigten $c_4$- bis $c_{10}$-Dicarbonsäuren, z.B. die Ester der genannten $C_1$- bis $C_{18}$-Alkohole mit Malein-, Fumar- and Itakonsäure, sowie $\alpha$-Ole-fine, z.B. Propylen, Butylen, Styrol und Vinyltoluol, wie Vinylether und Vinylketone, Vinylhalogenide wie Vinylfluorid und -bromid, sowie Vinylidenhalogenide, z.B. Vinylidenchlorid.

Bevorzugt werden die genannten Ester, insbesondere die Vinylester, die Acrylsäure-, die Methacrylsäure-, die Maleinsäure-, die Fumarsäureester und die Halogenderivate des Ethylens. Besonders bevorzugt sind die genannten Ester. Diese monoethylenisch ungesättigten, keine weiteren Reaktionen eingehenden, z.B. nicht vernetzend wirkenden, Monomeren, die einzeln oder als Gemisch eingesetzt werden können, sind in der Vinylkomponente b) in Mengen bis höchstens 40 Gew.-%, vorzugsweise höchstens 35 Gew.%, insbesondere von 0 bis 25 Gew.%, enthalten.

Weiterhin können in der Vinylkomponente b) noch weitere mit den anderen Monomeren copolymerisierbare Monomeren in Mengen von 0 bis 10 Gew.% enthalten sein. Solche Monomeren sind solche, die funktionelle Gruppen tragen oder mehrfach ethylenisch ungesättigt sind. Bevorzugt sind die funktionellen Monomeren. Unter ihnen werden hier solche Verbindungen verstanden, die neben einer ethylenischen Doppelbindung noch Carboxyl- ($COOH$- oder $COO^-$-), Sulfonat-, Epoxid-, Hydroxyl- oder ggf. durch z.B. Alkyl-, Hydroxyalkyl-, Alkoxyalkyl-, alkanoyl- oder Alkanoylalkyl-Gruppen substituierte Amidreste aufweisen. Als Beispiele hierfür seien genannt: Acryl-, Methacryl-, Itakon-, Fumar- und Maleinsäure, deren Alkali- oder Ammoniumsalze, deren Glycidylester, deren Mono- oder Diamide, insbesondere Acrylamid und Methacrylamid, die am Stickstoff ein- oder zweifach durch $C_1$- bis $C_4$-Alkylgruppen und/oder durch die Methylolgruppe, die ihrerseits auch durch einen Alkylrest verethert oder durch eine Alkylcarbonsäure verestert sein kann, substituiert sein können, Monoester der genannten Dicarbonsäuren mit den bereits früher genannten $C_1$- bis $C_8$-Alkanolen, Vinyl- und Allylsulfonate.

Als Beispiele für mehrfach ungesättigte Monomeren seien angeführt: Vinyl- und Allylester ungesättigter $C_3$- bis $C_8$-Monocarbonsäuren, sowie Mono- oder Divinyl- und -allylester von gesättigten oder ungesättigten $C_4$ bis $C_{10}$-Dicarbonsäuren, Triallylcyanurat und Di und Polyester von α, ß-ungesättigten Carbonsäuren mit polyfunktionellen Alkoholen.

Oftmals werden solche Monomeren der Gruppe b3), insbesondere die gut wasserlöslichen, wie die Carbonsäuren, ihre Salze und ihre Amide, und ganz besonders die Sulfonate vorzugsweise nur in Mengen von bis zu 2 Gew.% eingesetzt, da sie als Stabilitätsverbesserer der Dispersion verwendet werden. Monomere, über die spätere Vernetzung erfolgen kann, z.B. N-Methylol(meth)acrylamid werden oftmals vorzugsweise bis 5 Gew.% eingesetzt. Die genannten Gew.%-Angaben beziehen sich dabei jeweils auf das Gesamtgewicht der Vinylmonomerenkomponente b).

Besonders bevorzugt werden als Vinylmonomere Gemische von Vinylacetat und/oder Butylacrylat mit Vinylchlorid und insbesondere Vinylchlorid eingesetzt, denen ggf. noch geringe Mengen Acrylsäure und/oder Acrylamid zur Stabilitätsverbesserung der Dispersion zugesetzt werden können.

Die erfindungsgemäß hergestellten Copolymeren besitzen vorzugsweise K-Werte (nach DIN 53 726, gemessen in THF/$H_2O$ 95:5) von 20 bis 100, besonders vorzugsweise 30 bis 80, insbesondere 35 bis 70. Die Mindestfilmbildetemperaturen liegen im allgemeinen bei ≤ 20°C, vielfach ≤ 0°C, abhängig vom Ethylengehalt.

Ebenfalls eingesetzt wird mindestens eine inerte organische Substanz mit einer Wasserlöslichkeit von $10^{-3}$ bis 200 g/l, vorzugsweise von $10^{-2}$ bis 10 g/l, und einem Molekulargewicht von höchstens 1000, vorzugsweise höchstens 500. Außerdem werden solche inerte organische Substanzen bevorzugt, die einen Siedepunkt über 170°C (bei einem bar Druck) besitzen.

Diese inerten organischen Substanzen werden in Mengen von 0,1 bis 15 Gew.%, bezogen auf das Gesamtgewicht der Vinylmonomeren, vorzugsweise 0,5 bis 10 Gew.%, besonders vorzugsweise 1 bis 5 Gew.%, eingesetzt.

Bei höheren Einsatzmengen werden keine Dispersionen mit den vorteilhaften Eigenschaften, die gemäß der Erfindung hergestellt werden können, mehr erzielt.

Zugegeben werden zum Reaktionsgemisch kann die inerte organische Substanz ganz oder teilweise vor oder zu Beginn der Polymerisation, portionsweise während der Polymerisation, oder sie kann allmählich dosiert werden. Bevorzugt wird jedoch die Gesamtmenge der Substanz vorgelegt. Je geringer die Menge an vorgelegtem Vinylmonomeren bzw. an Samenlatex ist, desto geringer wird meist auch die Menge der vorgelegten organischen Substanzen gehalten, so daß das Verhältnis von organischer Substanz zu anwesendem Vinylmonomeren bzw. Samenlatex günstigerweise z.B. höchstens 2:1, vorzugsweise höchstens 1:1 beträgt.

Nach der Polymerisation kann die organische Substanz ggf. wieder durch geeignete Destillation aus der entstandenen Copolymerdispersion entfernt werden. In einer besonders bevorzugten Ausführungsform werden jedoch solche inerte organische Substanzen eingesetzt, die im Polymerisat beispielsweise als Weichmacher verbleiben können.

Der Ausdruck inerte organische Substanz bedeutet im Sinne dieser Erfindung, daß die Substanz während der Polymerisation einerseits nicht selbst nennenswert reagiert, z.B. nicht hydrolysiert wird, und andererseits das Wachstum der Polymerkette nicht oder nur wenig beeinflußt.

So soll die übertragungskonstante $C_s$ für die eingesetzten organischen Substanzen und Monomeren im allgemeinen kleiner als 0,05 sein, vorzugsweise höchstens 0,01 betragen.

Legt man jedoch für einen speziellen Anwendungsfall Wert auf ein niedriges Molekulargewicht des Plymerisats, so können solche organischen Substanzen eingesetzt werden, deren Übertragungskonstante diese genannte Grenze übersteigt, oder es können Gemische aus inerten organischen Substanzen und bekannten Reglern eingesetzt werden. Eine Definition und eine Auflistung von Übertragungskonstanten befindet sich z.B. in "Handbook of Polymer Science", J. Brandrup und E.H. Immergut (Herausgeber), 2. Auflage, Wiley-Interscience, New York, N.Y. 1975).

An das Lösevermögen der inerten organischen Substanz werden im erfindungsgemäßen Verfahren keine besonderen Anforderungen gestellt. Obwohl echte Lösungsmittel für das Polymere bevorzugt werden, eignen sich auch Verbindungen, die das Polymere nur anquellen. Im Grenzfall können auch Gemische aus Lösungsmitteln und Nichtlösern verwendet werden. Die Ausdrücke inerte organische Substanz oder Lösungsmittel umfassen im Sinne der Erfindung auch Weichmacher, z.B. gemäß der Definition in der Deutschen Industrienorm DIN 55 947:

"Weichmacher sind flüssige oder feste, indifferente organische Substanzen mit geringem Dampfdruck, überwiegend esterartiger Natur. Sie können ohne chemische Reaktion, vorzugsweise durch ihr Löse- bzw. Quellvermögen, unter Umständen aber auch ohne ein solches, mit hochpolymeren Werkstoffen in physikalische Wechselwirkung treten und ein homogenes System mit diesem bilden."

Geeignete organische Substanzen, die die vorgenannten Bedingungen erfüllen, sind dem Fachmann bekannt; die folgende Aufzählung soll nur beispielhaft sein und die Auswahl der Substanzen nicht einschränken.

Für das erfindungsgemäße Verfahren geeignete inerte organische Substanzen sind, sofern sie die obengenannten Bedingungen erfüllen, insbesondere:

1. Ester, Teilester und Polyester ein- oder mehrbasischer organischer Säuren (1 bis 20, bevorzugt 2 bis 8 C-Atome/Säuremolekül) mit ein- oder mehrwertigen Alkoholen (1 bis 20, bevorzugt 2 bis 8 C-Atome/Alkoholmolekül), deren C-Atom-Kette sowohl im Säure- als auch im Alkoholrest durch bis zu 3 Sauerstoffatome unterbrochen (Etherbindung) oder durch Epoxy-, $C_1$- bis $C_8$-Alkoxy-, Phenoxy- und/oder Hydroxygruppen substituiert sein kann.

Beispiele für geeignete Säuren zur Bildung solcher Ester sind:

Ameisen-, Essig-, Propion-, Butter-, Valerian-, Capron-, Capryl-, Caprin-, Ethylbutter- oder Ethylhexansäure, Pelargonsäure, Laurinsäure oder Benzoesäure, Oxal-, Malon-, Bernstein-, Glutar-, Adipin-, Sebacin-, Phthal-, Hexahydrophthal-, Trimellith-, Glykol-, Zitronen-, Wein-, Milch- oder Ricinolsäure und ihre Alkoxyderivate, epoxidierte Sojafettsäure, Epoxystearinsäure.

Beispiele für zur Veresterung mit den vorstehend genannten Säuren geeignete Alkohole sind:

Methanol, Ethanol, Propanole, Butanole, Pentanole, Hexanole, Heptanole oder Octanole, Cyclohexanol, Benzylalkohol, Ethylenglykol, Diethylenglykol, Triethylenglykol, Propan-, Butan-, Hexandiole, Trimethylolpropan, Pentaerythrit, Glycerin, Methyl-, Ethyl-, Butylglykol oder -diglykol, Phenylglykol, Glycidol.

Beispiele für besonders bevorzugte Ester sind:

Butyl(di)glykolacetat, Diethylenglykoldibenzoat, Triethylenglykoldibenzoat, Triethylenglykoldiethylbutyrat, Dibutylphthalat, Diethylhexylphthalat (Dioctylphthalat), Dibutyladipat, Dioctyladipat, Dimethylglykolphthalat, Butylphthalylbutylglykolat, Methyl- und Ethylphthalylethylglykolat, Diethoxyethyladipat, Dibutoxyethyladipat und -phthalat, Oligoester aus Triethylenglykol und Adipinsäure, 2,2,4-Trimethylpentadiol-1,3-monoisobutyrat, Butylbenzylphthalat, Butylkresylphthalat.

2. Ester der Phosporsäure mit ggf. substituierten Phenolen und/oder mit einwertigen Alkoholen (1 bis 20, vorzugsweise 2 bis 8 C-Atome/Alkoholmolekül), deren C-Atomkette durch bis zu 3 Sauerstoffatome unterbrochen oder durch $C_1$- bis $C_8$-Alkoxy- oder Phenoxygruppen oder Chloratome substituiert sein kann.

Beispiele für geeignete und bevorzugte Ester sind:

Trioctylphosphat, Trichlorethylphosphat, Tributylphosphat, Tributylglykolphosphat, Kresyldiphenylphosphat, Triphenylphosphat.

3. Alkohole mit 4 bis 20 C-Atomen/Molekül, deren C-Atomkette auch durch 1 bis 3 Sauerstoffatome unterbrochen oder durch $C_1$- bis $C_8$-Alkoxy- oder Phenoxygruppen substituiert sein kann.

Beispiele für geeignete Alkohole sind z.B. Ethylhexanol, Cyclohexanol, Methylcyclohexanol, Benzylalkohol, Monophenylglykol.

4. Ketone mit 5 bis 20 C-Atomen/Molekül, wie z.B. Methylisobutylketon, Cyclohexanon, Isophoron.

5. Ether und Acetale mit 4 bis 20 C-Atomen je Molekül, deren C-Atomkette durch 1 bis 3 Sauerstoffatome unterbrochen oder durch $C_1$- bis $C_8$-Alkoxy- oder Phenoxygruppen substituiert sein kann.

Beispiele für geeignete Ether sind z.B. Dibutylether, Dibenzylether oder Dibutoxyethoxyethylformal.

Besonders bevorzugt ist z.B. Diphenoxyethylformal.

6. Chlor- und Fluorkohlenwasserstoffe mit 1 bis 20 C-Atomen je Molekül, deren C-Atome jeweils mit maximal 2 Chloratomen substituiert sein können, wie z.B. Methylenchlorid, Dichlorethan, 1,1,2-Trichlor-1,2,2-Trifluorethan, Chlorbenzol, Chlordiphenyle, bevorzugt aus dieser Gruppe ist z.B. Methylenchlorid.

7. Aromatische Kohlenwasserstoffe mit 5 bis 20 C-Atomen je Molekül, wie z.B. Benzol, Toluol, Xylole; bevorzugt ist z.B. Toluol.

8. Organische Sulfonsäureamide, wie z.B. Toluolsulfonsäureethylamid, Benzolsulfonsäuremethylamid, Toluolsulfonsäurecyclohexylamid, Toluolsulfonsäureditert.-butylamid.

9. Ester organischer Sulfonsäuren mit 4 bis 20 C-Atomen mit einwertigen Alkoholen mit 4 bis 20 C-Atomen, wie z.B. Dodecansulfonsäurephenylester, Anisol-4-sulfonsäurekresylester, Diphenylether-4-sulfonsäurexylenylester.

10. Sulfone, wie z.B. Sulfonyl-bis-phenoxyethylacetat.

Bevorzugt werden Verbindungen der vorstehend genannten Gruppen (in der Reihenfolge abnehmender Bevorzugung) 1, 2, 5, 9, 6 und 7 eingesetzt. Natürlich können auch Gemische verschiedener Verbindungen verwendet werden.

Überraschenderweise ergibt sich sogar bei Vorlage der Gesamtmenge der organischen Substanzen eine sehr feinteilige, stabile Dispersion weitgehend ohne Grobanteile mit Festgehalten von 10 bis 75, vorzugsweise 30 bis 70, insbesondere 40 bis 60 Gew.%, bezogen auf Gesamtgewicht.

Das beanspruchte Verfahren wird als Emulsionspolymerisation durchgeführt. Zur Emulsionspolymerisation können alle üblichen Hilfsmittel, wie Emulgatoren, Schutzkolloide, Initiatoren, Reduktionsmittel und Regler in üblichen Mengen verwendet werden, wobei auch hier je nach Wunsch eine Vorlage, eine portionsweise Zugabe oder eine mehr oder weniger kontinuierliche Dosierung möglich sind.

Die Polymerisation wird mit den für die Emulsionspolymerisation üblicherweise eingesetzten Methoden eingeleitet. Besonders geeignet sind zumindest teilweise wasserlösliche, bevorzugt gänzlich wasserlösliche anorganische oder organische peroxidische Verbindungen, wie Peroxoverbindungen und Hydroperoxide, sowie wasserlösliche Azoverbindungen. Genannt seien Alkali- und Ammoniumperoxosulfate, -peroxodisulfate und -peroxophosphate, Wasserstoffperoxid, tert.-Butylhydroperoxid, Azobiscyanovaleriansäure.

Gfg. können die genannten Peroxidinitiatoren auch in bekannter Weise mit Reduktionsmitteln kombiniert werden. Geeignet sind z.B. Alkali-Formaldehydsulfoxylate (Brüggolith [CR]), Rongalit [(R)], Alkalibisulfite, -sulfite, -thiosulfate und Ascorbinsäure.

Solche Redoxsysteme werden bevorzugt. Vielfach ist dann auch der an sich bekannte Zusatz geringer Mengen von Schwermetallverbindungen, z.B. von Eisen-II-Salzen angezeigt.

Der für die Polymerisation gewünschte pH-Bereich, der im allgemeinen zwischen 2, 5 und 10, insbesondere 3 und 8 liegt, kann in an sich bekannter Weise durch geeignete Puffersysteme, z.B. den Phosphat- oder Carbonatpuffer, konstant gehalten werden.

Die für das erfindungsgemäße Verfahren geeigneten Emulgatoren und Schutzkolloide sind dem Fachman bekannt.

Prinzipiell sind nahezu alle oberflächenaktiven Substanzen zum Einsatz bei der Emulsionspolymerisation geeignet. Anwendungstechnische Anforderungen, eingesetzte Monomere und Reaktionsbedingungen bestimmen die Auswahl im konkreten Fall. Die verwendeten Mengen liegen dabei zwischen 0 und 10 Gew.%, bevorzugt zwischen 1 und 5 Gew.%, jeweils bezogen auf Komponente b).

Sowohl anionische als auch kationische als auch nichtionische als auch amphotere Tenside sind zur Emulsionspolymerisation nach dem erfindungsgemäßen Verfahren grundsätzlich einsetzbar; bevorzugt sind anionische und nichtionische Emulgatoren.

Eine Gliederung der für das erfindungsgemäße Verfahren möglichen Emulgatoren nach ihrer chemischen Natur findet sich z.B. bei Stache, "Tensid-Taschenbuch", Seite 159 ff, München 1979.

Bevorzugt eignen sich dabei zur Emulsionspolymerisation nach dem erfindungsgemäßen Verfahren als anionische Tenside:

1. Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 Ethylenoxid(EO-)Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- bzw. Alkylarylphosphate mit 8 bis 20 C-Atomen im organischen Rest, Alkylether- bzw. Alkylaryletherphosphate mit 8 bis 20 C-Atomen im Alkyl- bzw. Alkylarylrest und 1 bis 40 EO-Einheiten.

Als nichtionische Tenside Eignen sich:

5. Alkylpolyglykolether bevorzugt mit 8 bis 40 EO-Einheiten und Alkylresten von 8 bis 20 C-Atomen,

6. Alkylarylpolyglykolether bevorzugt mit 8 bis 40 EO-Einheiten und 8 bis 20 C-Atomen in den Alkyl- und Arylresten.

7. Ethylenoxid/Propylenoxid(EO/PO)-Blockcopolymere bevorzugt mit 8 bis 40 EO- bzw. PO-Einheiten.

Weiterhin eignen sich alle bei der Emulsionspolymerisation als Schutzkolloid verwendbaren Verbindungen zum Einsatz nach dem erfindungsgemäßen Verfahren, vorzugsweise in Mengen bis 15 Gew.%, bezogen auf Komponente b). Bevorzugt eignen sich:

1. Durch Verseifung hergestellte Vinylalkohol/Vinylacetat-Copolymere mit einem Gehalt von 80 bis 100, besonders bevorzugt 86 bis 90 Mol% Vinylalkoholeinheiten und einem viskosimetrisch ermittelten Molekulargewicht von 15.000 bis 100.000.

2. Zellulosederivate, besonders bevorzugt Hydroxyethylzellulosen mit einem Molekulargewicht von 50.000 bis $10^6$ und einem Substitutionsgradbereich von 1,5 bis 3.

3. Polyvinylpyrrolidone mit einem Molekulargewicht von 5.000 bis 400.000.

Es ist auch möglich, verschiedene Emulgatortypen während verschiedener Reaktionsstadien zu verwenden. So kann insbesondere bei Anwendung des Samenlatex-Verfahrens sich das bei der Herstellung des Samenlatex verwendete Emulgatorsystem grundsätzlich von dem der eigentlichen Polymerisation unterscheiden, soweit sich die Wirkungen der verschiedenen Emulgatoren nicht z.B. durch Reaktion miteinander aufheben.

Die erfindungsgemäß hergestellten überwiegend VC und E enthaltenden Polymerisatdispersionen oder Polymerisate können in allen Gebieten Anwendung finden, für die bekannte VC/E-Copolymerisate geeignet sind. So können die erfindungsgemäß hergestellten Dispersionen beispielsweise besonders gut zur Herstellung von Klebemitteln für Holz, Papier, Kunststoffolien oder Leder, als Bindemittel für Textilien oder in Anstrichfarben oder zur Beschichtung von Papier eingesetzt werden.

Das aus der Dispersion durch Abtrennen des Wassers gewonnene Polymerisat kann über die Schmelze zu Formkörpern verarbeitet werden oder nach Auflösung in einem geeigneten Lösungsmittel zur Herstellung von Lacken oder Klebstoffen dienen.

Die Erfindung wird durch folgende Beispiele und Vergleichsversuche erläutert. Dabei beziehen sich alle Prozentangaben, soweit nichts anderes angegeben ist, auf das Gewicht.

**Beispiel 1**

In einem 16 1-Autoklaven wird eine Lösung von 8 g eines Natriumalkylsulfonats (Alkylrest mit ca. 15 C-Atomen), 5,4 g Natriumvinylsulfonat, 18 g eines Tridecylpolyglykolethers (ca. 15 Glykoleinheiten) sowie 5,4 g Acrylamid und 11 g Acrylsäure gegeben, die auf pH 3,5 eingestellt ist.

Es wurde evakuiert, mit Stickstoff gespült und nach erneutem Evakuieren auf 50°C erwärmt. Nach Einemulgieren von 270 g Dioctylphthalat und 270 g VC wurde die Emulsion mit Ethylen bei 70 bar gesättigt.

Die Polymerisation wurde gestartet, indem man von einer Lösung von 60 g Ammoniumperoxodisulfat in 1 l Wasser sowie einer Lösung von 30 g Rongalit [R] in 1 l Wasser jeweils 150 ml je Stunde zudosiert.

15 Minuten nachdem der Start erfolgt war, wurden 5.420 g VC sowie eine Lösung von 158 g des Tridecylpolyglykolethers, 8 g Acrylamid und 16 g Acrylsäure in 900 g Wasser innerhalb 8 Stunden zudosiert.

Nach dem Einfahren der VC-, sowie der Emulgator(Comonomer-Dosierung wurde die Zugabegeschwindigkeit der Lösungen der Initiatorkomponenten auf 60 bis 90 ml je Stunde reduziert so daß nach Ende der VC-Dosierung noch 1 bis 2 Stunden die Initiatorlösungen weiter dosiert werden konnten.

Der Ethylendruck wurde während der VC-Dosierung konstant gehalten. Danach wurde kein Ethylen mehr zugeführt.

Insgesamt wurden 2.300 g Ethylen zugegeben. Der pH wurde während der Reaktion durch $NH_3$-Zugabe zwischen 3,5 und 4,5 gehalten.

Nach Ende der Initiatordosierung wurde der Ansatz vom restlichen Vinylchlorid und Ethylen durch Entspannen und einstündiges Evakuieren befreit.

Man erhielt eine Dispersion mit 52 % Feststoffgehalt.

Mindestfilmbildungstemperatur: 3°C.
E-Gehalt des Polymerisats: 23,9 %
Viskosität (Epprecht Rheometer STV/III A bei 20°C): 34 mPas.

K-Wert nach Fikentscher (DIN 53 726, gemessen in THF/Wasser 95: 5): 40.

**Beispiel 2**

Beispiel 1 wurde mit folgenden Änderungen wiederholt:

1. Anstelle von 270 g Dioctylphthalat wurden 130 g Toluol verwendet.
2. Es wurde auf 30°C erwärmt.
3. Statt 270 g Vinylchlorid wurde ein Gemisch aus 150 g VC und 45 g Vinylacetat (VAC) emulgiert.
4. Es wurde bei 60 bar mit Ethylen gesättigt und nach Polymerisation der Vorlage ein Monomerengemisch aus 4.850 g VC und 1.455 g VAC dosiert.
5. Während der Polymerisation wurde kein Ethylen nachgedrückt.

Es entstand eine Dispersion mit 49,6 % Festgehalt, einer Mindestfilmbildetemperatur von 11°C und einer Viskosität (gemessen wie im Beispiel 1) von 29 mPas. Der K-Wert des Polymerisates betrug 47, der E-Gehalt des Polymerisates 17 %. Toluolgehalt der Dispersion: 0,6 %.

**Beispiel 3**

Beispiel 1 wurde mit folgenden Änderungen wiederholt:

1. Anstelle von 270 g Dioctylphthalat wurden 260 g Methylenchlorid eingesetzt.
2. Es wurde auf 30°C erwärmt.
3. Statt 270 g Vinylchlorid wurde ein Gemisch aus 750 g VC und 225 g VAC einemulgiert.
4. Es wurde bei 50 bar mit Ethylen gesättigt und nach Polymerisation der Vorlage ein Gemisch aus 4.250 g VC und 1.275 g VAC dosiert.
5. Während der Polymerisation wurde kein Ethylen nachgedrückt.

Es entstand eine Dispersion mit 50,1 % Festgehalt, einer Mindesfilmbildetemperatur von 9°C und einer Viskosität (gemessen wie im Beispiel 1) von 17 mPas. Der K-Wert des Polymerisates betrug 55,7, der E-Gehalt 19 %.

Der Gehalt an Methylenchlorid betrug nur noch 0,02 %.

**Beispiel 4**

Es wurde eine Polymerisation in gleicher Weise wie im Beispiel 1 durchgeführt, jedoch war die Ammoniumpersulfatlösung vollständig der Polymerisationsvorlage beigegeben.

Insgesamt wurden 2.300 g E zugegeben.
Es resultierte eine Dispersion mit 50 % Feststoffgehalt.

Mindestfilmbildetemperatur: 1°C.
E-Gehalt des Polymerisats: 25,4 %.
Viskosität (gemessen wie im Beispiel 1): 27 mPas.
K-Wert (er wurde stets wie im Beispiel 1 gemessen): 39.

## Beispiel 5

In einem 16 l-Autoklaven wurden 5.710 g einer Polybutylacrylatdispersion mit 5,6 % Festgehalt und einer Teilchengröße von 0,06 µm, 500 ml Wasser und 120 g Butyldiglykolacetat vorgelegt, evakuiert, auf pH 4 eingestellt und auf 50°C erwärmt. Nach Zugabe von 15 ml einer 1 %-igen Ferroammonsulfat-Lösung wurde der Rührer mit 100 U/min eingeschaltet und die Vorlage bei 70 bar mit Ethylen gesättigt. Anschließend wurden gleichzeitig zudosiert:

1. 60 g Ammoniumpersulfat, gelöst in 70 ml Wasser mit 90 ml/Stunde

2. 30 g Rongalit [R] gelöst in 700 ml Wasser mit 30 ml/Stunde

3. 5.680 g VC mit 800 g/Stunde

4. 270 g Nonylphenolpolyglykolethersulfat mit ca. 25 Ethylenoxideinheiten, gelöst in 500 ml Wasser mit 100 ml/Stunde

Der Ethylendruck wurde bei 70 bar gehalten.

Eine Stunde nach Beendigung aller Dosierungen wurde der Ethylendruck abgeblasen und die entstehende Dispersion 20 Minuten unter Vakuum gerührt.

Das Produkt hatte folgende Kenndaten:

Polymerzusammensetzung: 70 Gew.% VC-, 26 Gew.% E- und 4 Gew.% Butylacrylat-Einheiten.

Mindesfilmbildetemperatur: 6°C.

Viskosität (Brookfield-Viskosimeter, 20 min$^{-1}$, 20°C): 41 mPas.

Rückstand nach Sieben durch ein Sieb mit 60 µm Maschenweite: 11 mg/kg Dispersion.

Teilchengröße (Elektronenmikroskop): 0,14 µm.

Festgehalt: 46 %.

Das aus der Dispersion isolierbare Polymere wies eine Reißfestigkeit von 1,98 N/mm² und eine Bruchdehnung von 1200 % auf.

## Beispiel 6

Beispiel 5 wurde mit folgenden Änderungen wiederholt:

Es wurden 5.835 g einer Polybutylacrylatdispersion mit 5,5 % Festgehalt und einer Teilchengröße von 0,1 µm, 72 g Natriumdicyclohexylsulfosuccinat, 180 g Diphenoxyethylformal und 150 mg Ferroammonsulfat bei pH 4 als Vorlage verwendet. Dosierung 3 wurde durch ein Gemisch aus 5.400 g VC und 600 g Butylacrylat (BA) und Dosierung 4 durch eine Mischung von 625 g N-Methylolacrylamid-Lösung (48 %-ig), 60 g Acrylsäure und 70 ml 5 %-ige Natronlauge ersetzt. Dosierung 4 wurde mit 115 ml/Stunde Zugegeben.

Die entstehende Dispersion hatte einen Festgehalt von 45,4 %, eine Viskosität (Brookfield 20 min $^{-1}$, 20°C) von 65 mPas und eine Mindestfilmbildetemperatur von 11°C. Die Teilchengröße betrug 0,24 µm.

Ethylengehalt: 24 %.

## Beispiel 7

Beispiel 5 wurde mit folgenden Änderungen wiederholt:

Anstelle von 120 g Butyldiglykolacetat wurden 120 g Trichlorethylphosphat verwendet, der Ethylendruck wurde auf 50 bar reduziert.

Es entstand eine Dispersion mit einem Festgehalt von 46 %, einer Mindestfilmbildetemperatur von 22°C und einem Ethylengehalt im Polymerisat von 20 %. Die Viskosität (Brookfield 20 min$^{-1}$, 20°C) betrug 27 mPas.

## Beispiel 8

Beispiel 7 wurde wiederholt, anstelle von Trichlorethylphosphat wurde jedoch Trioctylphosphat verwendet. Es enstand eine Dispersion, deren Kennzahlen mit denen aus Beispiel 7 übereinstimmten.

## Beispiel 9

Beispiel 7 wurde wiederholt, anstelle von Trichlorethylphosphat wurden jedoch 120 g Butyldiglykolacetat verwendet. Die entstehende Dispersion wies einen Festgehalt von 51,4 % und eine Mindestfilmbildetemperatur von 16°C auf. Der Ethylengehalt des Polymerisates betrug 22 %, die Viskosität (Brookfield 20 min$^{-1}$, 20°C) 33 mPas.

## Vergleichsversuch A

Beispiel 9 wurde ohne Verwendung von inerter organischer Substanz wiederholt.

Das Produkt zeigte folgende Kennzahlen:

Festgehalt der Dispersion: 48,2 %

Ethylengehalt des Polymerisates: 15 %

Mindestfilmbildetemperatur: 30°C

Der Dispersion wurde die in Beispiel 9 während der Polymerisation anwesende Menge Butyldiglykolacetat anteilmäßig nachträglich zugesetzt. Dieses Maßnahme senkte die Mindestfilmbildetemperatur lediglich auf 22, 5°C.

## Beispiel 10

In einem 16 1-Autoklaven wurden 4.900 g einer Polybutylacrylatdispersion mit 6,9 % Festgehalt und einer Teilchengröße von 0,056 µm, 60 g Natriumdicyclohexylsulfosuccinat, 15 ml einer 1 %-igen Ferroammonsulfatlösung und 120 g Rheoplex [R] 430 (Polyesterweichmacher der Firma Ciba Geigy AG, Marienberg) bei einem pH-Wert von 4,2 vorgelegt, evakuiert und auf 50°C erwärmt. Nach Einschalten des Rührers auf 100 U/min wurde bei 50 bar mit Ethylen gesättigt. Anschließend wurden gleichzeitig zudosiert:

1. 60 g Ammoniumpersulfat, gelöst in 700 ml Wasser mit 90 ml/Stunde

2. 30 g Rongalit $^{(R)}$, gelöst in 70 ml Wasser mit 90 ml/Stunde

3. 5.680 g VC mit 800 ml/Stunde

4. Eine Lösung von 60 g Dicyclohexylsulfosuccinat, 60 g Acrylamid und 60 g Acrylsäure in 1220 ml Wasser mit 200 ml/Stunde.

Der Ethylendruck wurde bei 50 bar gehalten. Eine Stunde nach Beendigung aller Dosierungen wurde auf pH 7 neutralisiert, abgeblasen und 1 Stunde unter Vakuum gerührt.

Die entstehende Dispersion hatte einen Festgehalt von 50,1 %, eine Viskosität (Brookfield 20 min$^{-1}$, 20°C) von 33 mPas und eine Mindestfilmbildetemperatur von 23°C.

Ethylengehalt des Polymerisates: 17 %.

## Beispiel 11

Beispiel 10 wurde wiederholt mit folgenden Änderungen:

1. Anstelle von 120 g Rheoplex $^{(R)}$ 430 wurden 120 g Diphenoxyethylformal eingesetzt.

2. Anstelle von 5.680 g VC wurde ein Gemisch aus 1700 g VAC und 3980 g VC dosiert.

Die Mindestfilmbildetemperatur der Dispersion betrug 17°C.

Ethylengehalt des Polymerisates: 17 %.

## Beispiel 12

In einem 16 1-Autoklaven wurden 2.300 g Wasser, 280 g Butyldiglykolacetat, 50 mg Ferroammonsulfat, 880 g einer 11 %-igen Lösung von Polyviol $^{(R)}$ M 13/140 (teilverseiftes Polyvinylacetat mit einer Hoeppler-Viskosität, gemessen bei 20°C in 4 %-iger xäßriger Lösung, von 13 mPas und mit einer Verseifungszahl von 140) und 1.850 g einer 20 %-igen Lösung von Polyviol $^{(R)}$ M 05/140 (Hoeppler-Viskosität 5 mPas, Verseifungszahl 140, Polyviole sind Polyvinylalkohol-Marken der Wacker-Chemie GmbH, München) gemischt, auf pH 4 eingestellt, evakuiert und auf 45°C erwärmt. Anschließend wurden 850 g VC und 1.100 g VAC einemulgiert, 1.200 g Ethylen aufgedrückt (42 bar) und die Polymerisation durch Zudosieren von 6 %-iger Ammonpersulfat- und 3 %-iger Rongalit-Lösung mit je 60 ml/Stunde gestartet. Nach erreichen von 15 % Festgehalt wurden 3.700 g VC mit 620 g/Stunde zudosiert. Der Ethylendruck fiel während der Polymerisation bis auf 20 bar ab. 2 Stunden nach Beendigung der Vinylchloriddosierung wurde die Initiatordosierung gestoppt, der pH-Wert auf 8 eingestellt, der Ansatz abgeblasen und 1 Stunde im Vakuum gerührt. Es entstand eine Dispersion mit einem Festgehalt von 54 % und einer Polymerzusammensetzung von 68 % Vinylchlorid, 17 % Vinylacetat und 14 % Ethylen, deren Mindestfilmbildetemperatur 3°C betrug.

Bei einem Vergleichsansatz ohne Butyldiglykolacetat mußte zum Aufdrücken von 1.200 g Ethylen ein Druck von 48 bar angewendet werden, der während der Polymerisation auf 60 bar anstieg. Das dabei entstehende Copolymerisat enthielt 11 % Ethyleneinheiten. Nach Einarbeiten der Beispiel 12 während der Polymerisation anwesenden Menge Butyldiglykolacetat sank die Mindestfilmbildetemperatur lediglich auf 8°C ab.

## Beispiel 13

Beispiel 1 wurde mit folgenden Abänderungen wiederholt:

1. In der Vorlage wurden die Mengen an Acrylamid auf 20 g, an Acrylsäure auf 40 g, an Na-Vinylsulfonat auf 30 g, erhöht und statt 270 g Dioctylphthalat wurden 160 g Dioctyladipat eingesetzt.

2. Acrylsäure und Acrylamid wurden nicht dosiert.

3. Die Monomerdosierzeit wurde von 8 auf 7 Stunden verkürzt.

4. Der Ethylendruck wurde ab 80 % der Monomerdosierung nicht mehr durch Nachspeisung konstant gehalten.

Es resultierte eine Dispersion mit

| | |
|---|---|
| Festgehalt | 51 % |
| Mindestfilmbildungstemperatur | 3°C |
| Viskosität (gemäß Beispiel 1) | 149 mPas |
| K-Wert | 44 |
| Ethylengehalt des Polymerisats | 25 % |

## Beispiel 14

In einem 16 1-Autoklaven wurden 5560 g Wasser, 72 g Acrylsäure, 36 g Acrylamid, 27,5 Na-Vinylsulfonat, 7,2 g eines handelsüblichen Na-Alkylsulfonats (C$_{15}$-Schnitt) und 50,4 g eines handelsüblichen Isotridecanolpolyglykolethers (15 Glykoleinheiten) vorgelegt.

Das Gemisch wurde auf 70°C aufgeheizt, 1000 g Vinylchlorid, 25 g Butylacrylat und 144 g Dioctyladipat wurden einemulgiert und mit Ethylen bei einem Druck von 70 bar gesättigt.

Durch rasches Zupumpen von 20 g Ammoniumpersulfat, in 200 g Wasser gelöst, wurde die Reaktion gestartet. Während 4 Stunden wurden dann parallel 4150 g Vinylchlorid, eine Lösung von 144 g des Isotridecanolpolyglykolethers in 480 g Wasser, sowie eine Lösung von 20 g Ammoniumpersulfat in 300 g Wasser dosiert.

Anschließend wurde noch 2 Stunden bei 70°C nachreagieren gelassen.

Es resultierte eine Dispersion mit

| | |
|---|---|
| Festgehalt | 51 % |
| Mindestfilmbildungstemperatur | 14°C |
| Viskosität (gemäß Beispiel 1) | 36 mPas |
| K-Wert | 70 |
| Ethylengehalt im Polymerisat | 18 % |

## Patentansprüche

1. Verfahren zur Herstellung feinteiliger wäßriger Copolymerdispersionen mit Festgehalten von 10 bis 75 Gew.%, bezogen auf Dispersion, durch Emulsionspolymerisation von
a)    1 vis 50 Gew.% Ethylen und
b)    99 bis 50 Gew.% mindestens eines
      Vinylmonomeren

mittels Radikalinitiator in Gegenwart von Emulgator und/oder Schutzkolloid und ggf. weiterer üblicher Zusätze, wobei sich die Vinylmonomerphase zusammensetzt aus
b1)    60 bis 100 Gew.% Vinlychlorid (VC),
b)     0 bis 40 Gew.% ethylenisch ungesättigter, öllöslicher und mit a) und b1) copolymerisierbarer Monomeren und
b3)    0 bis 10 Gew.% ethylenisch ungesättigter funktioneller und/oder mehrfach ungesättigter Monomeren,
       dadurch gekennzeichnet, daß man
       I die Vinylmonomerphase in einer Menge von etwa 1 bis 40 Gew. % vorlegt und
       II mindestens eine inerte organische Substanz mi einer Wasserlöslichkeit von $10^{-3}$ bis 200 g/l und einem Molekulargewicht von höchstens 1000 in einer Menge von 0,1 bis 15 Gew. %, jeweils bezogen auf das Gesamtgewicht der Komponente b), zumindest teilweise vorlegt,
       III den Rest der Komponente b) und ggf. der inerten organischen Substanz während der Polymerisation dosiert und
       IV bei einem Ethylendruck von 10 bis 150 bar, der spätestens zum Zeitpunkt der Auspolymerisation der Vorlage aufgebaut wird, bei Temperaturen von 0 bis 120°C polymerisiert.
2. Verfahren nach Anspruch 1, dadurch gekennzeichnet, daß als Vinylmonomere neben dem Vinylchlorid ggf.
b2)    ethylenisch ungesättigte Ester von nicht ethylenisch ungesättigten geradkettigen, verzweigten oder cyclischen Carbonsäuren und/oder Alkylester von ethylenisch ungesättigten Carbonsäuren und/oder Halogenderivate des Ethylens und
b3)    ethylenisch ungesättigte Monomere, die noch eine Carboxylgruppe, eine ggf. substituierte Amidgruppe, eine Sulfonatgruppe, eine Epoxidgruppe, eine Hydroxylgruppe oder eine weitere Gruppe mit ethylenisch ungesättigten Doppelbindungen aufweisen, verwendet werden.
3. Verfahren nach Anspruch 1 oder 2, dadurch gekennzeichnet, daß als Vinylmonomere neben Vinylchlorid die Vinylester von $C_1$- bis $C_{20}$-Alkylcarbonsäuren, $C_1$- bis $C_{18}$-Alkylester mit $\alpha$, $\beta$-ungesättigten $C_3$- bis $C_8$-Monocarbonsäuren und/oder Di-$C_1$- bis-$C_{18}$- Alkylester von ethylenisch ungesättigten $C_4$- bis $C_{10}$- Dicarbonsäuren, Vinylhalogenide und/oder Vinylidenhalogenide verwendet werden.
4. Verfahren nach einem der Ansprüche 1 bis 3, dadurch gekennzeichnet, daß ein in einer Vorstufe hergestellter Samenlatex vorgelegt wird.
5. Verfahren nach einem der Ansprüche 1 bis 4, dadurch gekennzeichnet, daß die inerte organische Substanz zur Gänze vorgelegt wird.

6. Verfahren nach einem der vorangegangenen Ansprüche, dadurch gekennzeichnet, daß der Ethylendruck bis zum Ende der Dosierung der Vinylmonomeren konstant gehalten wird.
7. Verfahren nach einem der vorangegangenen Ansprüche, dadurch gekennzeichnet, daß die Vinylmonomerdosierung dann begonnen wird, wenn der Vinylmonomergehalt in der Dispersion höchstens 25 Gew.% beträgt und so durchgeführt wird, daß diese Grenze nicht mehr überschritten wird.
8. Verwendung der nach einem der vorangehenden ansprüche hergestellten Dispersionen zur Herstellung von Klebemitteln für Holz, Papier, Kunststoffolien oder Leder, als Bindemittel für Textilien oder in Anstrichfarben oder zur Beschichtung von Papier.

## Claims

1. A process for the manufacture of fine-particle aqueous copolymer dispersions having a solids content of from 10 to 75 % by weight, calculated on the dispersion, by means of the emulsion polymerisation of
5a) from 1 to 50 % by weight of ethylene and
b) from 99 to 50 % by weight of at least one vinyl monomer, by means of radical initiators and in the presence of emulsifiers and/or protective colloids and, if desired, further standard additives, the vinyl monomer phase comprising
10 b1) from 60 to 100 % by weight of vinyl chloride (VC),
b2) from 0 to 40 % by weight of oil-soluble ethylenically unsaturated monomers copolymerisable with a) and b1), and
b3) from 0 to 10% by weight of ethylenically unsaturated functional monomers and/or multiply unsaturated monomers.

### Characterised in that

I the vinyl monomer phase is present at the start in an amount of approximately 1 to 40 % by weight, and
II at least one inert organic substance having a water solubility of from $10^{-3}$ to 200 g/l and a molecular weight of not more than 1000, in an amount of from 0.1 to 15 % by weight calculated in each case on the total weight of component b), is present at least partly at the start,
III the remainder of component b) and, optionally, of the inert organic substance, is metered in during polymerisation, and
IV polymerisation is carried out at temperatures of from 0 to 120 °C, under an ethylene pressure of from 10 to 150 bar, which is built up at the latest by the moment when the initial batch has polymerised.
2. A process according to claim 1, characterised in that besides vinyl chloride there may be used as vinyl monomers, if desired:

b2) ethylenically unsaturated esters of non-ethylenically unsaturated straight-chain, branched or cyclic carboxylic acids and/or alkyl esters of ethylenically unsaturated carboxylic acids and/or halogen derivatives of ethylene, and

b3) ethylenically unsaturated monomers which also have a carboxyl group, an unsubstituted or substituted amide group, a sulphonate group, an epoxide group, a hydroxy group or a further group with ethylenically unsaturated double bonds.

3. A process according to claim 1 or 2, characterised in that as vinyl monomers, besides vinyl chloride, the vinyl esters of ($C_1$ to $C_{20}$)-alkylcarboxylic acids, ($C_1$ to $C_{18}$)-alkyl esters with α, ß-unsaturated ($C_3$ to $C_8$)-monocarboxylic acids and/or di-($C_1$ to $C_{18}$)-alkyl esters of ethylenically unsaturated ($c_4$ to $C_{10}$)-dicarboxylic acids, vinyl halides and/or vinylidene halides are used.

4. A process according to one of claims 1 to 3, characterised in that a seed latex produced in a preceding stage is present at the start.

5. A process according to one of claims 1 to 4, characterised in that the whole of the inert organic substance is present at the start.

6. A process according to one of the preceding claims, characterised in that the ethylene pressure is kept constant until the metering—in of the vinyl monomers has been completed.

7. A process according to one of the preceding claims, characterised in that the metering—in of the vinyl monomers is begun when the vinyl monomer content of the dispersion does not exceed 25 % by weight, and is carried out in such a way that that limit is not thereafter exceeded.

8. The use of dispersions produced according to one of the preceding claims for the manufacture of adhesives for wood, paper, plastics films or leather, as binding agents for textiles or in paints, or for coating paper.

**Revendications**

1. Procédé pour la préparation de dispersions aqueuses, finement dispersées, de copolymères, présentant une teneur en matières sèches de 10 a 75 % en poids par rapport à la dispersion, par polymérisation en émulsion de:

a) 1 à 50 % en poids d'éthylène et

b) 99 à 50 % en poids d'au moins un monomère vinylique au moyen d'un initiateur radicalaire, en présence d'un émulsifiant et/ou d'un colloide protecteur, et éventuellement d'autres additifs classiques, la phase contenant le ou les monomères vinyliques étant constituée de:

b1) 60 à 100 % en poids de chlorure de vinyle (VC),

b2) 0 à 40 % en poids de monomères à insaturation éthylénique, solubles dans l'huile, et copolymérisables avec a) et b1) et

b3) 0 à 10 % en poids de monomères conctionnels à insaturation éthylénique et/ou à insaturations multiples, caractérisé en ce que:

I: on introduit au préalable une quantité de la phase contenant les monomères vinyliques représentant d'environ 1 à 40 % en poids et

II: on introduit au préalable au moins en partie, au moins une substance organique inerte présentant une solubilité dans l'eau de $10^{-3}$ à 200 g/l et un piods moléculaire de 1 000 au maximum, en quantité de 0,1 à 15 % en poids, par rapport au poids total des composant b) dans les deux cas,

III: on dose le reste des composants b) et éventuellement de la substance organique inerte durant la polymérisation, et

IV: on effectue une polymérisation à une température de 0 à 120°C, sous une pression d'éthylène de 10 à 150 bars, qui est établie au plus tard au moment de la polymérisation totale de la charge préalable.

2) Procédé selon la revendication 1, caractérisé en ce que, comme monomères vinyliques, on utilise éventuellement en plus du chlorure de vinyle:

b2) des esters a insaturation éthylénique d'acides carboxyliques a chaîne droite ou ramifiée ou cyclique et ne présentant pas d'insaturation éthylénique et/ou des esters d'alkyle d'acides carboxyliques à insaturation éthylénique et/ou des dérivés halogénés de l'éthylène, et

b3) des monomères à insaturation éthylénique présentant encore un groupe carboxylique, un groupe amide éventuellement substitué, un groupe sulfonate, époxy ou hydroxy, ou un autre groupe présentant des doubles liasions éthyléniques.

3. Procédé selon la revendicatin 1 ou 2, caractérisé en ce que, comme monomères vinyliques, on utilise en plus du chlorure de vinyle, des esters de vinyle d'acides alkyl-carboxyliques en $C_1$-$C_{20}$, des esters d'alkyle en $C_1$-$C_{18}$ d'acides monocarboxyliques en $C_3$-$C_8$ α, ß-insaturés et/ou des esters de dialkyle ($C_1$-$C_{18}$) d'acides dicarboxyliques en $C_4$—$C_{10}$ a insaturation éthylénique, des halogénures de vinyle et/ou des halogénures de vinylidène.

4) Procédé selon l'une quelconque des revendications 1 à 3, caractérisé en ce qu'on introduit au préalable un latex d'ensemencement qui a été préparé dans une étape préliminaire.

5) Procédé selon l'une quelconque des revendications 1 à 4, caractérisé en ce qu'on introduit au préalable la totalité de la substance organique inerte.

6) Procédé selon l'une quelconque des revendications 1 à 5, caractérisé en ce que la pression d'éthylène est maintenue constante jusqu' à la fin de l'introduction dosée des monomères vinyliques.

7) Procédé selon l'une quelconque des revendications 1 à 6, caractérisé en ce que l'on commence l'introduction dosée des monomères vinyliques lorsque la teneur en monomères vinyliques dans la dispersion est au plus égale à 25 % en poids, et de telle manière que cette limite ne soit plus franchie.

8) Utilisation des dispersions préparées par un procédé selon l'une quelconque des revendications

21     **0 076 511**     22

1 a 7 pour la préparation de colles à bois, pour le papier, pour les feuilles plastique ou le cuir, ou comme liant dans des produits textiles ou des colorants pour peinture, ou pour l'enduction de papier.